# EUROPEAN PATENT APPLICATION

(11) **EP 1 258 461 A2**
(43) Date of publication of application: **20.11.2002**
(21) Application number: 02253406.9
(22) Date of filing: 15.05.2002
(51) Int. Cl.: C03B 9/453

(54) **Dead plate for conveyor**

(30) Priority: 15.05.2001 GB 0111837
(71) Applicant: Sheppee International Limited, Elvington, York YO41 4AU (GB)
(72) Inventor: Seymour, Elliott, Auckley Doncaster DN9 3HU (GB)
(74) Representative: Wilson, Peter

(57) **Abstract**

The invention is a dead plate for use in a conveyor system thus, according to the invention, a dead plate for use in a conveyor system in conjunction with an object handler adapted to push objects placed on the dead plate from the dead plate onto a moving conveyor adjacent thereto, comprising a base plate provided with a two dimensional array of apertures for directing pressurised air generally perpendicularly upwardly therefrom, wherein apertures at edges of the said array such as in use lie outwardly from an object receiving pocket of the object handler are angled inwardly from the perpendicular such as in use to direct air flow towards the said pocket. The invention is also an object handling apparatus for use in a conveyor system incorporating such as deadplate.

## Description

The invention relates to a dead plate for use in a conveyor system, and to a conveyor system incorporating such a dead plate, and in particular the invention relates to a conveyor system for use during the forming of glass containers, and specifically to a dead plate of an individual section glass forming machine adapted to be used in conjunction with a pusher mechanism which transfers glass containers deposited on the dead plate to a moving conveyor for onward delivery of the formed containers.

In the field of glass forming, it is conventional for one or more hot formed containers or other objects to be deposited on to a dead plate of an individual section machine. These are transferred to an adjacent conveyor belt by a suitable object handler, usually in the form of pusher mechanism. Typical pusher mechanisms comprise hydraulic or otherwise mechanically actuated pusher arms provided at a distal end with one or more pockets to receive the containers. For example, one or more pockets may be generally L-shaped. In particular, the pusher may consist of a back plate and one or more laterally extending fingers serving to define one or more such L-shaped pockets. Formed containers are deposited proximate these pockets on the dead plate and transferred to the conveyor by action of the pusher.

It is frequently desirable to provide the dead plate with a pressurised air supply which is distributed through an array of apertures in the plate surface adapted to direct air jets generally vertically towards an object to be placed on the plate. This serves two purposes in relation to hot glass objects. First, as the hot glass object is being transferred prior to depositing on the plate, the air jets serve to cool the base thereof in particular, to reduce the tendency for the object to become damaged when it is placed on the dead plate. Second, the air jets effect a degree of cushioning as the object is dropped onto the dead plate and also continue the cooling process when the object is *in situ.*

Particular problems arise in keeping the object in position in a pusher pocket when it is on dead plate. It is desirable that the object is retained stably in the pocket, for example snugly in the corner of an L-shaped pocket, to prevent unwanted movement as the object is transferred to the main moving conveyor which might lead to damage, particularly in the case of relatively hot and therefore still relatively soft glass objects. For the same reasons of damage control however, excessive handling and/or the application of excessive force in positioning the object is undesirable.

The tendency is for the problem to be exacerbated by the use of dead plates with a built in air supply, in that the vertically directed jets of pressurised air tend to induce a degree of wobble in objects on the dead plate and increase instability. Moreover, the sweeping action of the pusher in sweeping the object from the dead plate to the moving conveyor results in a tendency for objects, even if initially snugly in the pocket, to move outwards therefrom. It is thus found that initial positioning of the object and timing tolerances of the various mechanisms are limited to an undesirable extent.

A number of solutions have been proposed in conventional glass object manufacturing/transfer systems. Containers such as bottles frequently have larger bases and narrower necks. Typically, the L-shaped or other pockets of the pusher or container handling arm are adapted to engage the lower part of such a bottle at a side and rear location. It is often necessary to provide further restraints to prevent such a bottle from drifting out of the pocket, for example in the form of a rod or wire engaging the neck of the bottle as it drifts out of the pocket. Such further restraints are undesirable, as they increase the amount of handling which a hot and therefore soft glass object will experience.

Additionally or alternatively, it has been suggested that horizontally directed air streams can be used to act upon the object and cause it to remain snugly in the pocket. For example, a pressurised air supply may be provided on the dead plate secured at a point opposite from the container handling arm and adapted to direct pressurised air against the side of the container furthest away from the corner against which it should be retained, to cause it to be retained more snugly therein. Additionally or alternatively, GB Patent 2 292 551 suggests the direction of a similar pressurised air stream inwardly of the container which causes a pressure differential producing a tendency for the object to be retained more snugly in the pocket.

Neither of these solutions are fully satisfactory or found to be fully effective. If the horizontal air stream is too weak, the object will still tend to move out of the pocket in practice. If the horizontal air stream is too strong, the object may be driven too violently into the pocket initially, resulting in distortion or other damage to the hot object. Moreover, the use of a separate air supply in such prior art systems additional to the air supply for the vertical cooling and cushioning jets in the dead plate increases the overall complexity of the system and likely cost of any production run.

It is an object of the present invention to produce a dead plate and a conveyor system incorporating the same which mitigates some or all of the above disadvantages.

It is a particular object of the invention to produce a dead plate which is adapted to ensure that a hot glass container can be retained in the pocket of a typical object handling apparatus, and in particular that a plurality of hot glass containers can be retained in the pockets of a multi-container pusher, without the need for a complex, multiple-source pressurised air supply.

It is a particular object of the present invention to provide a dead plate for a container handling apparatus which minimises handling damage during the handling of hot glass containers.

Thus, according to the invention, a dead plate for use in a conveyor system in conjunction with an object handler adapted to push objects placed on the dead plate from the dead plate onto a moving conveyor adjacent thereto, comprises a base plate provided with a two dimensional array of apertures for directing pressurised air generally perpendicularly upwardly therefrom, wherein apertures at edges of the said array such as in use lie outwardly from an object receiving pocket of the object handler are angled inwardly from the perpendicular such as in use to direct air flow towards the said pocket.

A single pressurised air supply is used to supply the apertures in the dead plate, whether these are conventionally directed purely to supply a vertical jet of air, or specially adapted to supply a jet of air directed partly inwardly away from the vertical so as to assist in retention of the object in the pocket. This produces great simplification of the system. The inwardly directed jets of air are found to enable retention of an object in the pocket in admirable manner, obviating the need for additional guides. Use of a single pressurised air supply, for example via a single supply manifold within the body of the dead plate, greatly simplifies the system when compared with prior art systems where several distinct air supplies are used.

In common with prior art container handling arms, the object handling arm in conjunction with which the present invention is designed to be used is provided with one or more pockets for receiving an object, such as a hot glass container. Each of these pockets is conveniently generally L-shaped, being provided with pusher surfaces adapted to act on both a rear and a side surface of the container so as to transfer it simply but efficiently from the dead plate to the moving conveyor. In particular, the object handling arm consists of a back plate and one or more laterally extending finger plates together defining one or more L-shaped pockets.

In conjunction with such an object handling arm, the dead plate is conveniently provided with an array of apertures which is generally rectangular in extent with edges of the rectangle in use lying generally parallel to faces of the L-shaped pocket. The inwardly angled apertures are thus provided at two adjacent edges thereof, being a first edge in use disposed opposite the back plate of the container handling arm with the apertures angled generally theretowards, and a second edge in use disposed opposite a container handling surface of the finger plate and directed generally theretowards. Thus, air jets from the angled apertures provide a jet stream which in combination serves to urge an object towards the pocket and retain an object therein during handling, and in particular to resist the tendency in prior art systems for an object to wander out of the pocket as the handling arm acts to transfer it to a conveyor.

For example in respect of the above described embodiment an outer row or rows of the two edges as above described may be directed inwardly, with the remainder of the apertures in the generally rectangular array being directed substantially vertically. It is preferred that the majority of the air jets continue to be directed generally vertically as in conventional apparatus, as the cooling and cushioning effects of the conventional apparatus are still desired. In particular, a degree of prior cooling before the object is deposited on to the dead plate is desirable. By ensuring that most air jets remain vertical, and only some are directional, the balance of conventional cushioning and cooling jet streams versus directional positioning jet streams can be controlled, for example by controlling the pressure of the air supplied.

Preferably, at least the two outer most rows on the said two edges of the array are inwardly directed.

Preferably, the inwardly directed apertures are angled at at least about 30° from the vertical and more preferably at at least about 45° from the vertical. It is desirable that the influence of the inwardly directed jet stream on the object should not be too great, in particular when the object is being held immediately prior to transfer onto the dead plate for initial cooling. Excessive lateral forces at this point are undesirable as they may introduce distortion into the object. This will be particularly the case in relation to a hot glass object such as a hot bottle which is being transferred by being held by the neck, since excessive lateral forces at this point will result in a tendency for the neck to become bent.

For most purposes, it will be desirable for a mass production to machine the apertures into the base of the dead plate, which places a typical maximum of around 60° from the vertical on the angle of the angled apertures. More horizontally directed apertures could be produced by casting for example. However, apertures too close to the horizontal are undesired since the resultant air stream will be negligible, reducing the effectiveness of the system.

Any suitable configuration or pattern may be used for the apertures in the dead plate. Preferably, the apertures are regularly spaced. For example, the apertures may be in a hexagonal or square array. Such a repeated regular pattern allows control to a range of suitable shapes and sizes for the overall area covered by the aperture array, and in particular readily lends itself to production of a generally rectangular array of apertures in accordance with the preferred embodiment.

In a preferred embodiment, the apertures are in a square pattern. The overall array of apertures consists of a primary square pattern of substantially vertically directed apertures, in particular arranged in a generally rectangular array, with one or more rows of inwardly angled apertures disposed along two adjacent edges thereof. In a particularly preferred embodiment, the said one or more rows are laterally offset relative to the primary array, for example having the same spacing but being laterally offset by half a period.

In this way, the inwardly angled apertures are adapted to produce inwardly directed jet streams which are directed towards gaps in the primary vertical jet streams, to minimise turbulent interference between the two jet streams.

For use with multi object pushers, the array of apertures may optionally further comprise a row or rows extending laterally outwardly in use from the base plate of the pusher, and angled from the vertical in similar manner to that above described rearwardly towards a lateral arm associated with each pocket. Each of these laterally extending rows of inwardly directed apertures thus works in conjunction with the apertures directing pressurised air generally towards the back plate of the object handler to ensure that objects in the multi object handler are each pushed to their respective pockets.

It is a necessary feature of the invention that the apertures are generally inwardly directed and at an appropriate angle from the vertical. Provided this general requirement is met, it is found that the precise direction to which the aperture directs a jet stream is not critical. Surprisingly, it has been found that the two arrays of jets directed generally rearwardly and generally sideways produce an overall jet stream which serves admirably to retain an object in its respective pocket.

Indeed, for simplicity, in a preferred embodiment, apertures directed rearwardly towards a back plate of an object handler in use may all be generally parallel and generally angled directly towards the back plate, and apertures directed towards a side plate, such as an object handling surface of a laterally extending finger as above described, may all be generally parallel and generally angled directly towards the surface of the side plate. It is not necessary to vary the directionality of the various apertures such that they point specifically towards the pocket of an L-shaped object handler.

The dead plate may be manufactured of any suitable material having adequate high temperature properties. Generally, stainless steel and other metal alloys are satisfactory for use for dead plates for the handling of hot glass containers and the like, although in some instances, particularly where a specially low thermal conductivity is required, insulating surfaces have been provided and/or dead plates based on insulators, such as carbon fibre or asbestos have been utilised (the latter now clearly unacceptable for environmental reasons). In most circumstances, for simplicity of manufacture of the overall dead plate, it is desirable if the apertures can be machined. Therefore, the dead plate is preferably fabricated from a machineable metal alloy such as stainless steel.

In a further aspect, the invention comprises an object handling apparatus for use in a conveyor system especially in an individual section glass object forming line, in particular for transferring hot glass objects to a moving conveyor to deliver the containers onward, the object handling apparatus comprising a dead plate as above described in conjunction with a suitable object handler device.

In particular, the object handler device comprises a pneumatically actuated handling arm provided with one or more object receiving pockets, for example in the form of, a back plate and one or more laterally extending finger plates respectively defining one or more L-shaped pockets.

In particular, the object handler incorporates a pusher plate adapted for transferring a plurality of containers from the dead plate of a glass forming machine or the like to a conveyor, which pusher plate comprises a generally planar back plate, and a plurality of fingers extending transversely therefrom and defining a corresponding number of container receiving pockets.

The invention will now be described by way of example only with reference to Figures 1 to 3 of the accompanying drawings in which
Figure 1 is a plan view and cross section of a first embodiment of dead plate in accordance with the invention;
Figure 2 is a plan view and cross section of a second embodiment of dead plate in accordance with the invention;
Figure 3 is a plan view of the dead plate of Figure 2 in conjunction with a double pocketed object pusher.

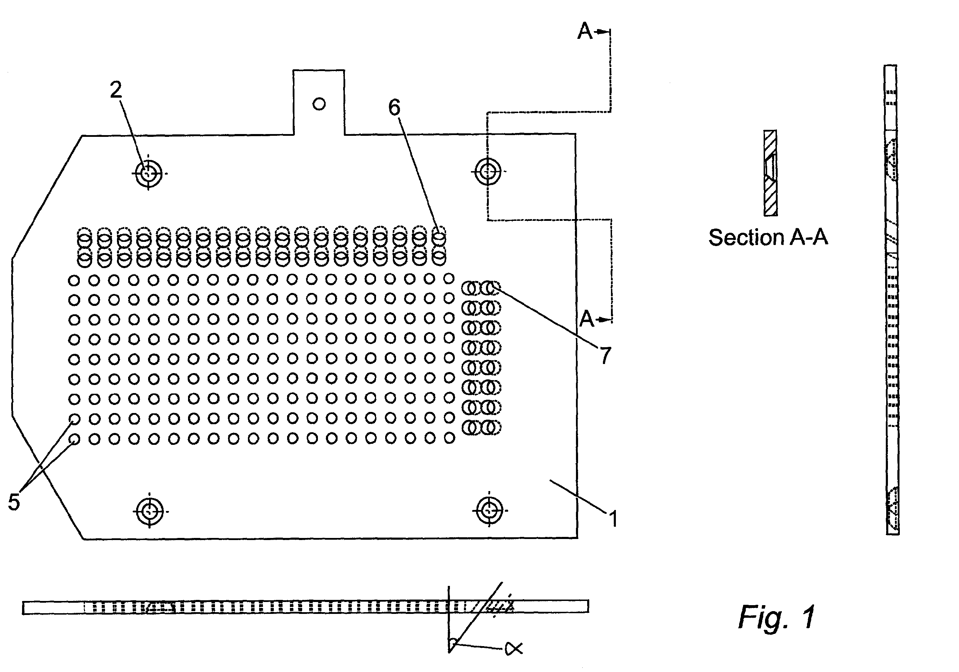

Referring first to Figure 1, a dead plate (1) fabricated from 316 stainless steel is illustrated. The dead plate is provided with mountings (2) and an array of apertures which deliver a pressurised air supply from an air supply manifold (not shown) located below.

The apertures consist of a primary array of apertures (5) arranged in a regularly spaced square pattern over a generally rectangular area. The apertures (5) are generally vertical and thus adapted to direct jet streams of air generally vertically to provide a cooling and cushioning effect in conventional manner.

Located along an adjacent long and short edge of this rectangual area are two rows of directional apertures (6, 7). These are angled inwardly at an angle to the vertical of 30°. In use, the apertures (6) will be directed towards the back plate of the pusher, and the apertures (7) towards a side plate of the pusher, with the jet streams of the two apertures producing a combined effect which tends to urge the container to stay in the pocket defined by the back plate and side plate (or side plates in the case of a multi-object pusher).

The apertures (6, 7) are similarly spaced to those in the square array (5), but are offset by half a pitch to minimise interference between the vertical and inwardly directed jet streams.

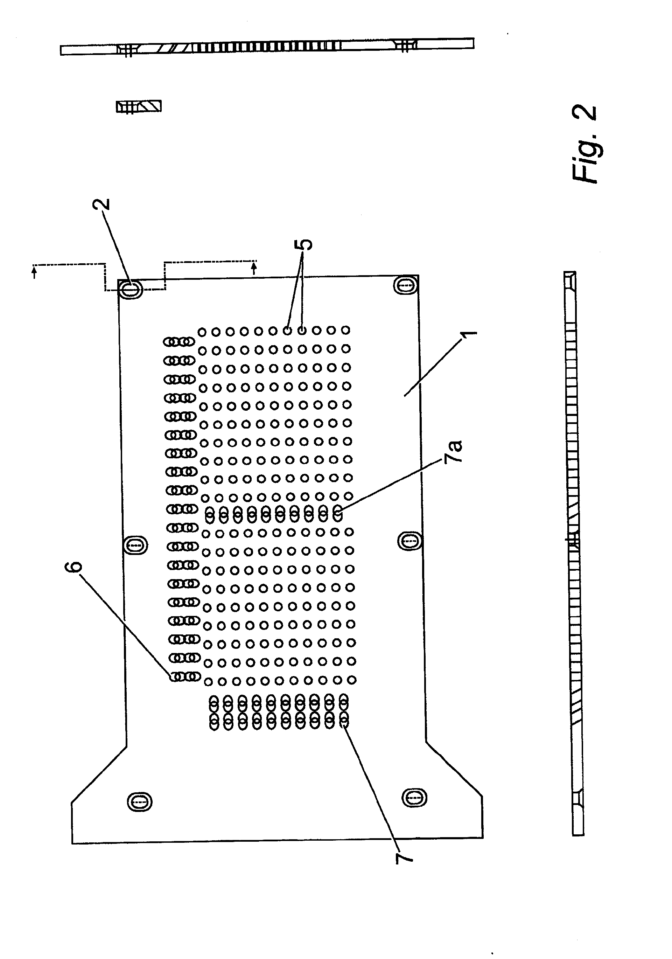

Referring to Figure 2 an alternative embodiment of dead plate is shown. This dead plate (1) is of generally similar construction, to that of Figure 1, and like numerals are used for like components where applicable. However, it is specifically adapted for use with a two pocket pusher. In this adaptation, in addition to the two rows of directional apertures (7), a further row of directional apertures (7a) is provided to supply an augmented lateral jet stream for the second pocket.

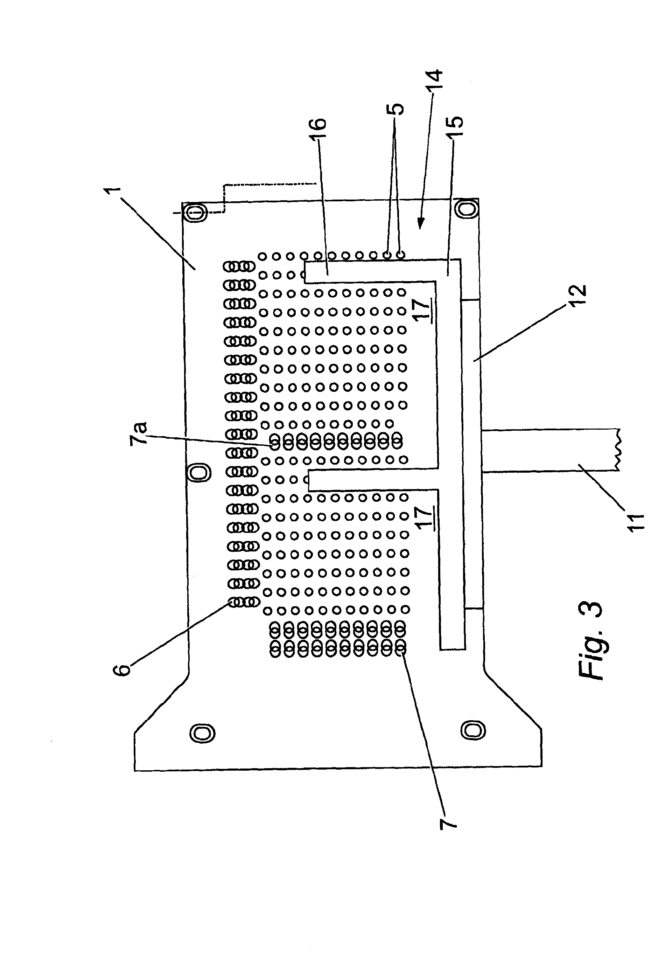

The way in which this works is illustrated in Figure 3 in which a pusher of generally conventional design providing two L-shaped pockets is shown in place over the dead plate of Figure 2.

In Figure 3, a pushing arm (11), which may for example be pneumatically actuated, is provided with a mounting plate (12) adapted to engage a bottle pusher plate (14) in the usual conventional form comprising a back plate (15) and a plurality (in this case two) of perpendicularly extending finger plates (16) which define two L-shaped pockets (17).

Hot bottles are transferred to the vicinity of the dead plate (1) by a suitable transfer arm (not shown). Typically, they will be held briefly above the dead plate (1) to allow some degree of cooling from the vertically directed jets produced by the apertures (5) in conventional manner. The bottles will then be dropped onto the dead plate in the general vicinity of the pockets (17) in conventional manner.

It is intended that each bottle is initially located in a pocket (17). The pusher mechanism is actuated to cause the bottles to be pushed towards a moving conveyor (not shown). The number of pockets (17) and hence the number of finger plates (16) will depend on the overall processing question. In the example, a double pocket is shown but pushers of one, two, three, four or more pockets will be known to the person skilled in the art.

In prior art systems, there is tendency, particularly when the pusher plate is moving, for the containers to stray from the pockets (17) which can result in damage as they are still relatively hot and soft and/or necessitate the provision of further guides and restraints to prevent movement. The directional apertures (6, 7, 7a) are adapted to limit this effect. The apertures (6) direct a stream if air towards the back plate (15). The apertures (7, 7a) direct a stream of air towards the two finger plates (16). These directed streams of air interact so as generally to urge the objects into, and to urge the objects to remain in, the L-shaped pockets (17).

The invention achieves the object of retaining objects in the pockets in an admirable manner. It dispenses with the need to use additional mechanical restraints to keep the bottles in the pocket (17), and thus reduces the risk of additional handling damage. The system is simple, in that the air supply used for the conventional apertures (5) is also used for the apertures (6 & 7), so no separate supply is needed.

## Claims

1. A dead plate for use in a conveyor system in conjunction with an object handler adapted to push objects placed on the dead plate from the dead plate onto a moving conveyor adjacent thereto, comprising a base plate provided with a two dimensional array of apertures for directing pressurised air generally perpendicularly upwardly therefrom, wherein apertures at edges of the said array such as in use lie outwardly from an object receiving pocket of the object handler are angled inwardly from the perpendicular such as in use to direct air flow towards the said pocket.

2. A dead plate in accordance with Claim 1 wherein a single pressurised air supply is used to supply the apertures in the dead plate.

3. A dead plate in accordance with Claim 2 wherein the single pressurised air supply is provided by means of a single supply manifold within the body of the base plate.

4. A dead plate in accordance with any preceding claim adapted to be used in conjunction with an object handling arm provided with one or more pockets for receiving an object which is generally L-shaped, being provided with pusher surfaces adapted to act on both the rear and the side surface of the container so as to transfer it simply but efficiently from the dead plate to the moving conveyor, the object handling arm consisting of a back plate and one or more laterally extending finger plates together defining one or more L-shaped pockets.

5. A dead plate in accordance with Claim 4 provided with an array of apertures which is generally rectangular in extent with edges of the rectangle in use lying generally parallel to faces of the L-shaped pocket, such that the inwardly angled apertures are thus provided at two adjacent edges thereof, being a first edge in use disposed opposite the back plate of the container handling arm with the apertures angled generally theretowards, and a second edge in use disposed opposite a container handling surface of the finger plate and directed generally theretowards.

6. A dead plate in accordance with Claim 5 wherein an outer row or rows of the two edges are directed inwardly, with the remainder of the apertures in the generally rectangular array being directed substantially vertically.

7. A dead plate in accordance with any preceding claim wherein the inwardly directed apertures are angled at an angle generally between 30° and 60° from the vertical.

8. A dead plate in accordance with any preceding claim wherein the apertures are regularly spaced for example in a hexagonal or square array.

9. A dead plate in accordance with Claim 8 wherein the overall array of apertures consists of a primary square pattern of substantially vertically directed apertures, in particular arranged in a generally rectangular array, with one or more rows of inwardly angled apertures disposed along two adjacent edges thereof, and wherein the said one or more rows are laterally offset relative to the primary array, for example having the same spacing but being laterally offset by half a period.

10. An object handling apparatus for use in a conveyor system especially in an individual section glass object forming line, in particular for transferring hot glass objects to a moving conveyor to deliver the containers onward, the object handling apparatus comprising a dead plate as above described in conjunction with a suitable object handler.

11. An object handling apparatus in accordance with Claim 10 wherein the object handler device comprises a pneumatically actuated handling arm provided with one or more object receiving pockets, for example in the form of, a back plate and one or more laterally extending finger plates respectively defining one or more L-shaped pockets.

12. An object handling apparatus in accordance with Claim 10 or Claim 11 wherein the object handler incorporates a pusher plate adapted for transferring a plurality of containers from the dead plate of a glass forming machine or the like to a conveyor, which pusher plate comprises a generally planar back plate, and a plurality of fingers extending transversely therefrom and defining a corresponding number of container receiving pockets.
